# EUROPEAN PATENT APPLICATION

(11) **EP 4 721 963 A1**
(43) Date of publication of application: **08.04.2026**
(21) Application number: 23957434.6
(22) Date of filing: 20.11.2023
(51) Int. Cl.: B29D 99/00, B29C 70/52, B29C 70/36, B29C 70/68

(54) **METHOD FOR FORMING THERMOPLASTIC COMPOSITE SPAR CAP, AND SPAR CAP OF WIND TURBINE BLADE**

(30) Priority: 02.11.2023 CN 202311450720
(71) Applicant: Sinoma Wind Power Blade Co., Ltd., Beijing 100192 (CN)
(72) Inventor: MOU, Shuxiang, Beijing 100192 (CN); LIU, Yan, Beijing 100192 (CN); WU, Baoyang, Beijing 100192 (CN); LU, Xiaofeng, Beijing 100192 (CN); LI, Chengliang, Beijing 100192 (CN)
(74) Representative: Murgitroyd & Company
(86) International application number: PCT/CN2023/132752
(87) International publication number: WO 2025/091580

(57) **Abstract**

Disclosed in the present application are a method for forming a thermoplastic composite spar cap, and a spar cap of a wind turbine blade. The forming method comprises : using a thermoplastic resin material to form pultruded panel finished products each having a surface covered with peel ply; stacking in a preset mode the pultruded panel finished products and interlayer bonding layers having a bonding function, so as to generate a spar cap intermediate body; and arranging an adhesive-absorbing layer on a surface of the spar cap intermediate body, and performing curing treatment on the spar cap intermediate body to form a spar cap. During manufacturing the spar cap, the interlayer bonding layers can undergo a first soak in a thermoplastic resin, and the thermoplastic resin in a solidified state is stored; and during the process of curing the spar cap intermediate body, the thermoplastic resin melts at a specified temperature, and fibers in the interlayer bonding layers undergo a second soak therein.

## Description

### CROSS-REFERENCE TO RELATED APPLICATION

This application claims priority to Chinese Patent Application No. 202311450720.3, titled "METHOD FOR FORMING THERMOPLASTIC COMPOSITE MAIN BEAM AND WIND TURBINE BLADE MAIN BEAM" and filed on November 2, 2023, which is hereby incorporated by references in its entirety.

### TECHNICAL FIELD

The present application relates to the field of wind power technology, and in particular to a method for forming a thermoplastic composite main beam and a wind turbine blade main beam.

### BACKGROUND

The main beam is a primary load-bearing component or structural element in wind turbine blades. Currently, the main beams of mainstream products are all made using pultruded plates as the layering material. The pultruded plates have a specified cross-section and thickness and can be made from fiberglass or carbon fiber materials. Their configuration is a multi-layer unidirectional layering structure. For design forms of the main beam using fiberglass or carbon fiber fabrics, the manufacturing process employs vacuum infusion methods. With the rapid development of the wind power industry, the length of wind turbine blades has evolved from the 40m class to over 100m, and the root diameter of the blades has increased from 2m to over 4m. Large wind turbine blades generally have a length exceeding 80m, a main beam thickness generally exceeding 50mm, and a width ranging from 300mm to 600mm.

In related technologies, due to the forming process of pultruded plates, it is currently difficult to directly produce an integral pultruded main beam that matches the dimension and contour of the large wind turbine blades. During the manufacturing of the main beams, an overall infusion process is employed, or the pultruded plates with a certain thickness and width are stacked, and intermediate fabric layers are provided between the pultruded plate layers. The entire main beam is formed by resin infusion through the intermediate fabric layers. In the stacked structure formed by the pultruded plate layers, the flow guidance effect is relatively strong in a direction parallel to the interfaces between the layers of the pultruded plates. To ensure the strength and stiffness of the intermediate fabric layers, the intermediate fabric layers are generally produced using carbon fiber. However, the carbon fiber has defects of poor permeability and poor wettability. In related arts, when manufacturing the wind turbine blade main beam, on-site resin infusion is necessary, which can easily lead to local impregnation defects or even dry fiber defects. These infusion defects can seriously affect the quality of the main beam and pose significant safety risks to the wind turbine blades.

### SUMMARY

The present application provides a method for forming a thermoplastic composite main beam and a wind turbine blade main beam, which can solve the problem of local impregnation defects and dry fibers caused by resin infusion in the manufacturing of large wind turbine blade main beams.

In one aspect, an embodiment of the present application provides a method for forming a thermoplastic composite main beam, comprising: forming a pultruded plate product with a surface covered by a release fabric using thermoplastic resin material; stacking the pultruded plate product and an interlayer bonding layer with an adhesive property in a predetermined manner to form a main beam intermediate body; and providing an absorbent layer on a surface of the main beam intermediate body and curing the main beam intermediate body to form a main beam.

According to an aspect of the present application, the pultruded plate product is an initial pultruded plate with a conventional structure; or the pultruded plate product is a special-shaped pultruded plate with a special structure, and the step of forming a pultruded plate product with the surface covered by the release fabric using thermoplastic resin material comprises: forming the initial pultruded plate with the surface covered by the release fabric using the thermoplastic resin material; and melting and modifying the initial pultruded plate to form the pultruded plate product.

According to an aspect of the present application, the step of forming the initial pultruded plate with the surface covered by the release fabric using the thermoplastic resin material comprises: passing a fiber strand through an impregnation tank containing the thermoplastic resin material using a traction device to form an impregnation fiber; guiding and curing the impregnation fiber to produce a pultruded plate intermediate body; and wrapping the pultruded plate intermediate body with the release fabric and cutting the pultruded plate intermediate body to form a plurality of initial pultruded plates with a predetermined dimension.

According to an aspect of the present application, before the step of guiding and curing the impregnation fiber to produce a pultruded plate intermediate body, the method further comprises: passing the impregnation fiber through a predetermined gap of a positioning roller group to ensure that the thermoplastic resin material in a unit dimension of the impregnation fiber is within a predetermined range.

According to an aspect of the present application, the initial pultruded plate comprises a deformable part, and the step of melting and modifying the initial pultruded plate to form the pultruded plate product comprises: transferring the initial pultruded plate to an interior of a first mold, which is configured for melting and modifying the initial pultruded plate and comprises a modification part corresponding to the deformable part; heating the interior of the first mold to soften the initial pultruded plate by heat; and applying pressure to the first mold to compress the deformable part by the modification part to form the pultruded plate product.

According to an aspect of the present application, the step of stacking the pultruded plate product and the interlayer bonding layer with an adhesive property in a predetermined manner to form a main beam intermediate body comprises: processing a plurality of pultruded plate products based on a predetermined dimension of the main beam to obtain a standardized pultruded plate layers; and alternately and intermittently laying the standardized pultruded plate layers and the interlayer bonding layer to form the main beam intermediate body, a bottom layer and a top layer of the main beam intermediate body each being the standardized pultruded plate layers.

According to an aspect of the present application, the predetermined dimension of the main beam comprises a predetermined length and a predetermined width, and the step of processing the plurality of pultruded plate products based on the predetermined dimension of the main beam to obtain the standardized pultruded plate layers comprises: removing the release fabric from the surface of the pultruded plate product to obtain first pultruded plates; based on the predetermined length, trimming and tensioning a plurality of first pultruded plates along a length direction of the first pultruded plates to obtain second pultruded plates; and based on the predetermined width, splicing or trimming a plurality of second pultruded plates along a width direction of the second pultruded plates to obtain the standardized pultruded plate layers consistent with the predetermined dimensions of the main beam.

According to an aspect of the present application, along a width direction of the main beam intermediate body, both sides of the interlayer bonding layer and both sides of the standardized pultruded board layer have adhesive gaps θ, which satisfy a relationship: 1mm ≤ θ ≤ 5mm; and the interlayer bonding layer comprises at least one of a film adhesive, prepreg, and semi-prepreg, as well as a gas-permeable felt and a fiber component.

According to an aspect of the present application, the step of providing the absorbent layer on the surface of the main beam intermediate body and curing the main beam intermediate body to form the main beam comprises: laying an isolation film and a first absorbent felt sequentially on a whole surface of a second mold configured for curing the main beam intermediate body; transferring the main beam intermediate body into an interior of the second mold; laying a second absorbent felt on a whole surface of the main beam intermediate body, and the second absorbent felt fully covering a vacuum port of the second mold; laying a vacuum tape along an edge of the second mold and performing vacuum treatment and pressure holding treatment on the second mold; and after the second mold passes a pressure holding test, heating the second mold and preserving heat in the second mold to form the main beam.

In another aspect, an embodiment of the present application provides a wind turbine blade main beam, which is manufactured by using the aforementioned method for forming a thermoplastic composite main beam.

The method for forming a thermoplastic composite main beam and the wind turbine blade main beam provided by the present application use thermoplastic resin to impregnate fibers in the production of the pultruded plates and the interlayer bonding layer. The thermoplastic resin has the properties of softening when heated and hardening when cooled. The interlayer bonding layer in the present application can be impregnated with thermoplastic resin for the first time and stores the solidified thermoplastic resin. During the process of stacking and curing the pultruded plates and the interlayer bonding layer to form the main beam, heating can melt the thermoplastic resin in the interlayer bonding layer again, and under pressure, the resin can re-impregnate the fibers in the interlayer bonding layer. The impregnation quality of the thermoplastic resin between the fibers can be fully guaranteed, and thus there is no need for additional resin infusion operations. While ensuring the quality of the main beam forming, the use of the infusion auxiliary materials can also be reduced.

### BRIEF DESCRIPTION OF THE DRAWINGS

In order to more clearly illustrate the technical solutions of embodiments of the present application, a brief description will be given below with reference to the need to be used in the embodiments of the present application. For those skilled in the art, other drawings can be obtained according to these drawings without involving any inventive effort.
Fig. 1 is a flowchart of a method for forming a thermoplastic composite main beam according to the present application.
Fig. 2 is a flowchart of a method for making an initial pultruded plate according to the present application.
Fig. 3 is a flowchart of a method for curing the main beam intermediate body according to the present application.
Fig. 4 is a flowchart of a production process of a pultruded plate according to the present application.
Fig. 5 is a layout diagram of an example of the melting and modification of an initial pultruded plate according to the present application.
Fig. 6 is a cross-sectional view of an example of a pultruded plate product according to the present application.
Fig. 7 is a cross-sectional view of an example of a main beam intermediate body according to the present application.
Fig. 8 is a cross-sectional view of another example of a main beam intermediate body according to the present application.
Fig. 9 is a layout diagram showing the curing of the main beam intermediate body according to the present application.

In the drawings, the drawings are not necessarily drawn to scale.

Reference numbers: fiber strand 11; impregnation tank 12; guide plate 13; curing device 14; traction device 15; cutting device 16; deformable part 17; initial pultruded plate 1; first mold 2; modification part 21; pultruded plate product 3; release fabric 31; interlayer bonding layer 4; isolation film 5; first absorbent felt 6; second absorbent felt 7; gas exhaust spiral tube 8.

### DETAILED DESCRIPTION

The various features and exemplary embodiments of the present application will be described in detail below. To make the objectives, technical solutions, and advantages of the present application clearer, the present application will be further described in detail below in combination with the drawings and specific embodiments. It should be understood that the specific embodiments described herein are intended to explain the present application and are not intended to limit the present application. For those skilled in the art, the present application can be implemented without some of these specific details. The following description of the embodiments is merely to provide a better understanding of the present application by way of example.

It should be noted that, in this text, relational terms such as first and second are used merely to distinguish one entity or operation from another entity or operation, and do not necessarily require or imply any such actual relationship or order between these entities or operations. Moreover, the terms "comprising," "including," or any other variants thereof are intended to cover non-exclusive inclusions, such that a process, method, item, or device that includes a series of elements not only includes those elements but also includes other elements not explicitly listed, or elements inherent to such a process, method, item, or device. Unless otherwise specified, an element defined by the phrase "including..." does not exclude the presence of additional identical elements in the process, method, item, or device.

The present application is based on the inventor's discovery and understanding of the following facts and problems.

Wind turbine blades are an important component of wind power generation units. The materials used in the manufacture of wind turbine blades mainly include glass/carbon fiber, structural adhesive, matrix resin, core materials, and anti-oxidation coatings. The wind turbine blades are components that directly face the wind to obtain wind energy. After the introduction of new composite materials into the design and manufacturing fields of the wind turbine blades, the manufacturing processes of the wind turbine blades have also undergone significant changes.

Materials with high specific strength or high specific stiffness are typically selected for the main beam of the blade, which features a multi-layer unidirectional layering structure. For the main beam design forms using fabrics such as fiberglass or carbon fiber, the manufacturing process employs vacuum infusion methods, that is, laying fiberglass layers on top of the main beam mold, sealing and creating a vacuum, infusing resin, and curing to form the shape. With the widespread promotion of pultruded plates, pultruded plates with specified cross-sectional shapes have become the preferred choice for main beam layering materials. Pultruded plates are composite material plates produced by passing continuous fibers or their fabrics, impregnated with resin, through a mold of a specified shape and then heating and curing the resin under the action of a traction device. In the production process, the processed pultruded plates are stacked and arranged, with fabric layers of certain specifications laid between different layers and stacks, and then they are bundled together and placed into the main beam mold or blade mold for infusion molding to form the required main beam structural components.

With the rapid development of the wind power industry, the length of wind turbine blades has evolved from the 40m class to over 100m, and the root diameter of the blades has increased from 2m to over 4m. Currently, the main beams of mainstream products all use pultruded plates as the layering material, and pultruded plates have specified cross-sections and thicknesses. The length of large wind turbine blades generally exceeds 80m, the thickness generally exceeds 50mm, and the width ranges from 300 to 600mm. Due to the forming process of pultruded plates, it is currently difficult to directly produce a pultruded main beam that matches the dimensions of wind turbine blades. Accordingly, currently, pultruded plates with a certain thickness and width are generally used, and the main beam with the specified thickness and width is manufactured through stacking in the thickness direction and splicing in the width direction. Because this main beam has a plurality of layers and stacks, the existing blade infusion forming process will have a certain probability of infusion defects between different plate layers, such as poor impregnation or dry fiber. Moreover, carbon pultruded plates with excellent structural performance are generally selected as the main material for the pultruded main beams, carbon fiber cloth or carbon-glass hybrid fabrics are generally used as interlayer fabrics between pultruded plate layers to improve interfacial properties and perform interlayer flow guidance. However, carbon fiber has low permeability and poor wettability and often suffers from local impregnation defects or even dry fiber. To solve the problem of difficult infusion molding of pultruded plate main beams for large wind turbines, in addition to researching infusion process methods, research should also be conducted on interlayer fabric materials to fully utilize existing materials and technical conditions to manufacture better quality and more stable pultruded main beam forming methods, reducing the occurrence rate of manufacturing process defects.

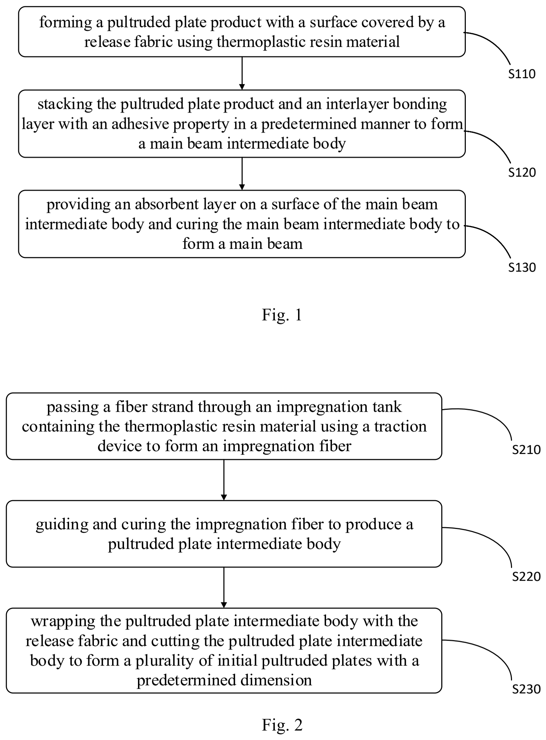

The present application provides a method for forming a thermoplastic composite main beam and a wind turbine blade main beam. The interlayer bonding layer 4 in the main beam forming method can be impregnated with thermoplastic resin for the first time and store the solidified thermoplastic resin. During the process of stacking and curing the pultruded plates and the interlayer bonding layer 4 to form the main beam, heating can melt the thermoplastic resin in the interlayer bonding layer 4 again, and under pressure, the resin can re-impregnate the fibers in the interlayer bonding layer 4. The impregnation quality of the thermoplastic resin between the fibers can be fully guaranteed. Below, the method for forming a thermoplastic composite main beam and a wind turbine blade main beam according to the present application will be described in detail in combination with Figs. 1 to 9.

The method for forming a thermoplastic composite main beam provided by the present application, as shown in Fig. 1, may include the following steps S110 to S130.

S110: forming a pultruded plate product 3 with a surface covered by the release fabric 31 using thermoplastic resin material.

In the present application, it is understood that the thermoplastic resin material, which refers to a class of organic polymer compounds with linear or branched structures, can harden at a specified temperature and will soften when heated without undergoing a chemical reaction. The amount of the resin can be determined by calculation. After the production of the entire pultruded plate product 3, covering the surface of the pultruded plate product with release fabric 31 is conducive to the storage of the pultruded plate product 3.

Based on this, pultruded plate products 3 made from the thermoplastic resin material are not limited to the specific properties of a particular mold and can be remelted and reshaped after heating. This not only improves the molding efficiency of pultruded plates but also reduces the application of a large number of other auxiliary materials.

S120: stacking the pultruded plate product 3 and an interlayer bonding layer 4 with an adhesive property in a predetermined manner to form a main beam intermediate body.

In the present application, the main beam intermediate body comprises a plurality of pultruded plate products 3 and a plurality of interlayer bonding layers 4 stacked alternately. The interlayer bonding layer 4 is connected with a plurality of pultruded plate products 3 into a single unit. The interlayer bonding layer 4 has an adhesive property. Based on this, connecting pultruded plate products 3 with the interlayer bonding layer 4 to form the main beam intermediate body can replace the process of infusing resin into the pultruded plate products to make the main beam. This can eliminate the resin infusion process in the mold and simplify the main beam forming process, thereby reducing the use of infusion auxiliary materials.

S130: providing an absorbent layer on a surface of the main beam intermediate body and the main beam intermediate body is cured to form the main beam.

In the present application, the completed main beam intermediate body is transferred to a predetermined mold as a whole and subjected to heating and pressurization to facilitate the curing and forming process of the main beam. During the curing and forming process of the main beam intermediate body, an absorbent layer is applied to an outer surface of the main beam intermediate body to absorb the molten resin exuded from the prepreg/semi-prepreg in the interlayer bonding layer 4 during the heating and pressurizing process, ensuring no residual glue remain in the prepreg materials during the curing process. Based on this, after the main beam is demolded, workers do not need to separately grind resin-rich edges and substandard bonding surfaces of the main beam, and The quality control in the processing and forming of the blade main beam is excellent.

The above is the method for forming the thermoplastic composite main beam provided by the present application. First, the pultruded plate product 3 is produced, and then the pultruded plate product 3 is stacked with the interlayer bonding layer 4. Both the pultruded plate product 3 and the interlayer bonding layer 4 use thermoplastic resin as the matrix material during preparation, which makes the pultruded plate product 3 convenient for secondary modification and eliminates the infusion process in the traditional manufacturing of large wind turbine blade main beams.

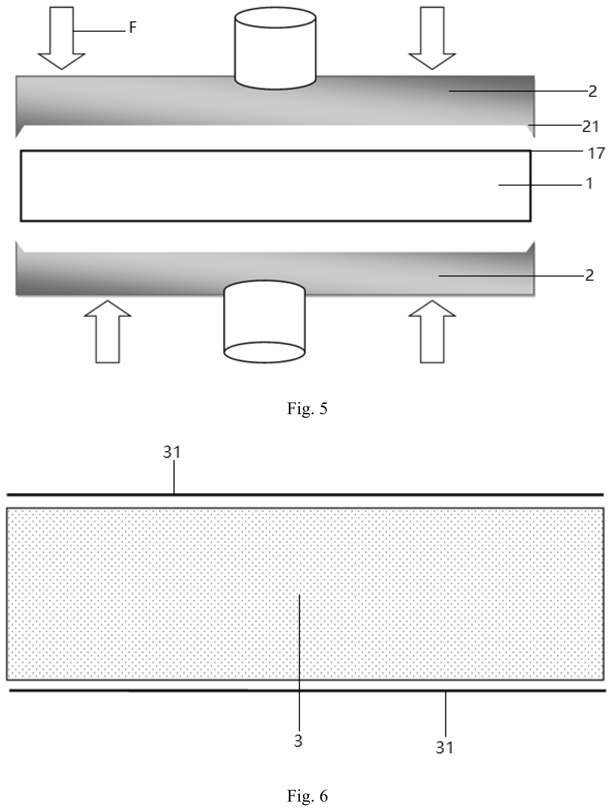

In some embodiments, the pultruded plate product 3 can be an initial pultruded plate 1 with a conventional structure or a special-shaped pultruded plate. As shown in Fig. 6, the corners of the pultruded plate product 3 are set at right angles, and a layer of release fabric 31 is provided on both the upper and lower sides of the pultruded plate product 3.

The present application provides a method for making a special-shaped pultruded plate, which may include the following steps: (1) forming an initial pultruded plate 1 with a surface covered by a release fabric 31 using thermoplastic resin material; (2) melting and modifying the initial pultruded plate to form a pultruded plate product 3.

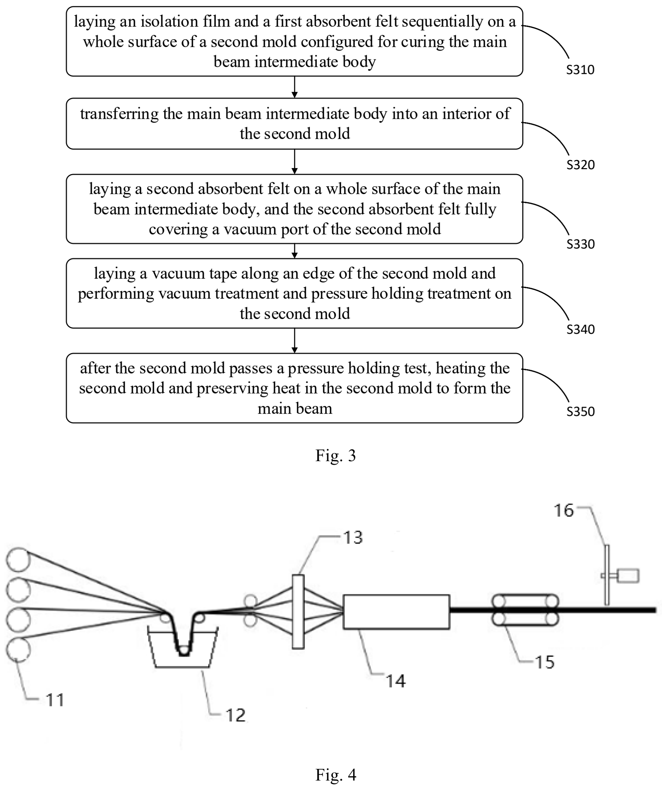

In some embodiments, the present application provides a method for forming an initial pultruded plate with a surface covered by a release fabric using thermoplastic resin material. In the producing process of the pultruded plate, as shown in Fig. 4, fiber strands 11 can be used as raw materials and treated using a plurality of devices such as an impregnation tank 12, a guide plate 13, a curing device 14, a traction device 15, and a cutting device 16.

As shown in Fig. 2, the method may include the following steps:
S210: passing the fiber strands 11 through the impregnation tank 12 containing thermoplastic resin material using the traction device 15 to form impregnated fibers.

In the present application, as shown in Fig. 4, the impregnation tank 12 contains thermoplastic resin and is equipped with a positioning guide roller group. The positioning guide roller group includes a first roller group and a second roller group, wherein the first roller group is located above the liquid level of the thermoplastic resin, and the second roller group is immersed in an interior of the thermoplastic resin. Based on this, the fiber strands 11 are impregnated with thermoplastic resin in the impregnation tank 12, and the thermoplastic resin gradually permeates into the fiber strands 11 to form impregnated fibers with an adhesive property.

In an example, as shown in Fig. 4, the first roller group may include two guide rollers, and the second roller group can be one positioning roller. Under the traction of the traction device 15, the fiber strands 11 pass around the two guide rollers and one positioning roller, forming impregnated fibers pre-impregnated with resin from inside the impregnation tank 12.

In another example, the position of the positioning roller can be adjusted based on the needs of fiber impregnation. On the one hand, as the fiber strands 11 continue to be impregnated, the amount of thermoplastic resin pre-placed in the impregnation tank 12 will gradually decrease, and the liquid level of the thermoplastic resin inside the impregnation tank 12 will gradually lower. When the position of the positioning roller is higher than the resin liquid level, the impregnation of the fiber strands 11 will be affected. Therefore, to ensure the stable impregnation operation of the fiber strands 11, the position of the positioning roller can be adjusted based on the amount of resin in the impregnation tank 12.

S220: guiding and curing the impregnated fibers to produce a pultruded plate intermediate body.

In the present application, after the fiber strands 11 are impregnated with resin, the impregnated fibers are guided by the guide plate 13. After passing through the guide plate 13, the fiber strands 11, impregnated with thermoplastic resin, are cured and formed at a specified temperature provided by the curing device 14. Based on this, during the curing process of the impregnated fibers, the thermoplastic resin gradually cures and solidifies into a whole after permeating into the fiber strands 11. The cured pultruded plate intermediate body can be stably stored and preserved for subsequent processing.

S230: covering the pultruded plate intermediate body with the release fabric and cutting the pultruded plate intermediate body to form a plurality of initial pultruded plates 1 with predetermined dimensions.

In the present application, to ensure that the cured pultruded plate intermediate body can be transferred and stored as a clean and stable whole, its surface can be covered with a release fabric 31. Workers can use the cutting device 16 to cut the formed pultruded plate intermediate body to obtain a plurality of initial pultruded plates 1. Based on this, before making the main beam intermediate body, the initial pultruded plate 1 can be stably transferred and stored, and the thermoplastic resin in the initial pultruded plate 1 can be preserved in a stable solid state.

In some embodiments, the method for forming an initial pultruded plate with a surface covered by a release fabric using thermoplastic resin material further includes, before S220 (guiding and curing the impregnated fibers to make a pultruded plate intermediate body): passing the impregnated fibers through a predetermined gap of the positioning roller group to ensure that the thermoplastic resin material in the unit dimension of the impregnated fibers is within a predetermined range.

Since the predetermined gap of the positioning roller group is a fixed value, when the impregnated fibers pass through the positioning roller group, the excess thermoplastic resin in the impregnated fibers will be squeezed out. Thus, by adjusting the dimension of the predetermined gap, the amount of thermoplastic resin impregnated in the fiber strands 11 can be adjusted to ensure that the thermoplastic resin material in the unit dimension of the impregnated fibers is within an appropriate range by adjusting the resin content of the fiber strands 11 during impregnation.

In some embodiments, the initial pultruded plate 1 has a deformable part, which can be the corner or other parts of the initial pultruded plate 1, and the corner can be a right angle. In the process of producing the initial pultruded plate 1, the initial pultruded plate 1 with a right-angle corner is simple to form. Since the initial pultruded plate 1 uses thermoplastic resin as the adhesive for connecting the fiber strands 11 and thermoplastic resin has the property of softening when heated and hardening when cooled, the initial pultruded plate 1 can be melted and modified at a specified temperature to obtain a pultruded plate product 3 with a special shape. The step of melting and modifying the initial pultruded plate 1 to form the pultruded plate product 3 may include the following steps.
(1) The initial pultruded plate 1 is transferred into the first mold 2, which is configured for melting and modifying the initial pultruded plate 1 and includes a modification part 21 corresponding to the deformable part 17.
(2) An interior of the first mold 2 is heated to soften the initial pultruded plate 1 by heat.
(3) Pressure is applied to the first mold 2 to squeeze the deformable part 17 by the modification part 21 to form the pultruded plate product 3.

As shown in Fig. 5, when melting and modifying the initial pultruded plate 1, the initial pultruded plate 1 is transferred into the first mold 2. The position of the deformable part of the initial pultruded plate 1 is checked to ensure that the deformable part corresponds to the modification part 21 of the first mold 2. Based on this, after heating the first mold 2, pressure F is applied to press the first mold 2 and deform the initial pultruded plate 1 to form the pultruded plate product 3.

In some embodiments, the interlayer bonding layer 4 can be composed of a gas-permeable felt, a fiber component, and at least one of a film adhesive, prepreg, and semi-prepreg. Thus, by providing a gas-permeable felt, the permeability of the interlayer bonding layer 4 can be increased to avoid the formation of too many bubbles during the pressurized and curing process of the interlayer bonding layer 4.

It can be understood that the adhesive film is a kind of viscous structural adhesive film. When combined with fiber components, the adhesive film has an adhesive property and can form the middle layer connecting the upper and lower sides of the pultruded plate product 3. Prepreg is a fiber fabric that has been completely impregnated with a resin matrix. Semi-prepreg contains continuous fiber fabrics that are only partially impregnated with resin matrix, with a small number of dry fiber strands on one side that have not been impregnated. These dry fiber strands can be impregnated during the heating and curing process. Prepreg and semi-prepreg are fiber/fabric that have been pre-impregnated, its resin content has been determined, and the molding quality of the structure made from prepreg and semi-prepreg is relatively stable. In the present application, the resin matrix can be a thermoplastic resin.

Based on this, prepreg and semi-prepreg applied to the blade main beam forming process have undergone two impregnation processes. When the fiber/fabric is pre-impregnated, the thermoplastic resin is impregnated into the fiber for the first time and is stored in a solidified state. During the heating and curing process, the thermoplastic resin remelts and, under pressure, re-impregnates the fibers in the interlayer bonding layer 4. The impregnation quality of the thermoplastic resin between the fibers can be fully guaranteed, avoiding local impregnation defects and dry fiber problems caused by resin infusion. The prepreg and semi-prepreg can be made using the impregnation tank 12 shown in Fig. 4.

In an example, the prepreg is a fiber fabric with both sides impregnated. During the impregnation process of the fiber fabric, the positioning roller is located at the bottom of the impregnation tank 12; or, when the resin content is about to decrease to the position of the positioning roller, the operator promptly adds resin to the impregnation tank 12; or, the position of the positioning roller is adjusted in real-time based on the needs to ensure that the positioning roller is always immersed in the resin so that both sides of the fiber strands 11 are immersed in the thermoplastic resin, thereby ensuring the impregnation quality of the prepreg.

In another example, the semi-prepreg is a fiber fabric with a single side impregnated. During the impregnation process of the fiber fabric, the position of the positioning roller is adjusted in real-time to ensure that the positioning roller is always at the critical liquid level of the resin. The fiber strands 11 are not fully immersed in the resin during the impregnation process. One side of the fiber fabric is impregnated with a certain degree of resin to form the semi-prepreg.

It can be understood that, due to the fact that thermoplastic resin can be stored in a more stable solid state at low temperatures, the prepreg and semi-prepreg are generally stored in cold storage (cold storage conditions: below 5°C) from the end of production until they are put into use, in order to ensure the stability of the prepreg and semi-prepreg during long-term storage.

In some embodiments, the step of stacking the pultruded plate product 3 and the interlayer bonding layer 4 with an adhesive property in a predetermined manner to form a main beam intermediate body may include the following steps.
(1) Based on the predetermined dimension of the main beam, processing a plurality of pultruded plate products 3 to obtain standardized pultruded plate layers. Each pultruded plate product 3 can be rolled up and stored after production. When using the pultruded plate product 3 to produce the main beam intermediate body, the rolled-up pultruded plate product 3 needs to be unrolled and cut into a standardized pultruded plate layers based on the dimension of the main beam intermediate body to be produced.
(2) Alternately and intermittently laying the standardized pultruded plate layers and the interlayer bonding layer 4 to form the main beam intermediate body, with a bottom layer and a top layer of the main beam intermediate body being the standardized pultruded plate layers. After processing the pultruded plate product 3 based on the predetermined dimension of the main beam, one standardized pultruded plate layer is used as the bottom layer. Then, the interlayer bonding layer 4 and the standardized pultruded plate layers are alternately stacked from bottom to top to form the main beam intermediate body. Thus, under the connection of the interlayer bonding layer 4, the main beam intermediate body is made by stacking the plurality of standardized pultruded plate layers, which can eliminate the resin infusion process between the plurality of standardized pultruded plate layers.

In an example, during the laying process of the standardized pultruded plate layers, the standardized pultruded plate layers are fed forward by the traction unit of the plate conveying platform. The plate conveying platform is provided with rollers flush with the platform surface, which have low friction, to facilitate the movement of the standardized pultruded plate layers along the conveying platform. Meanwhile, the plate conveying platform also has a guide device and a side guard to prevent the standardized pultruded plate layers from falling off the platform. Based on the starting and ending positions of the layup operation, the standardized pultruded plate layers is conveyed to the corresponding axial position by the conveying platform, after which the conveying platform stops feeding and waits for hoisting and transfer. After the standardized pultruded plate layers are transported to the designated position, it is lifted by the vacuum suction cup fixture of the conveying platform and then positioned and placed on the layup platform.

In another example, after each layer of the standardized pultruded plate layers is laid, the standardized pultruded plate layers are laterally squeezed and compacted from the middle of the blade towards the root and tip of the blade by the lateral limiting device of the layup platform, so that the standardized pultruded plate layers are tightly attached to the guard edge of the main beam of the layup platform.

In some embodiments, the predetermined dimension of the main beam includes a predetermined length and a predetermined width. The step of processing a plurality of pultruded plate products 3 based on the predetermined dimension of the main beam to obtain the standardized pultruded plate layers may include the following steps.
(1) Remove the release fabric 31 from the surface of the pultruded plate product 3 to obtain first pultruded plates.
(2) Based on the predetermined length, trim and tension a plurality of first pultruded plates along the length direction to obtain second pultruded plates.
(3) Based on the predetermined width, splice or trim a plurality of second pultruded plates along the width direction to obtain the standardized pultruded plate layers consistent with the predetermined dimension of the main beam.

In an example, the step of removing the release fabric 31 from the surface of the pultruded plate product 3 may include the following steps.
(1) Check and confirm that the unwinding machine, release fabric tearing device, chamfering grinding head, plate conveying and stacking platform, and hoisting locking device are all operating normally without dust or residue. A flat lifting strap is used to pass under the roll of the flat pultruded plate product 3, and a crane is used to lift the roll to a height of less than 1.5m.
(2) Remove the limit guard of the unwinding machine and adjust the movable support of the unwinding machine to be upwards, and then adjust the outer diameter of the movable support of the unwinding machine to the minimum.

After lifting the roll of the pultruded plate product 3, the direction of the roll of the pultruded plate product 3 is adjusted to be clockwise, the crane is operated to move the roll of the pultruded plate product 3 to the feeding side of the unwinding machine, and the unwinding machine is then fine-tuned to ensure that the packaging straps of the roll of the pultruded plate product 3 do not interfere with the unwinding machine supports. The inner diameter of the roll of the pultruded plate product 3 is then placed on the fixed support of the unwinding machine, and the crane is slowly lowered until the lifting straps are no longer taut.

(3) The limit guard of the unwinding machine is installed, the movable support is adjusted to be in tight contact with the inner diameter of the roll of the pultruded plate product 3, the outer diameter pressure roller of the unwinding machine is adjusted to be in tight contact with the outer diameter of the roll of the pultruded plate product 3, the unwinding machine is slowly rotated for one full turn, the roll of the pultruded plate product 3 is visually checking to ensure that it does not wobble, the lifting strap and crane are then removed, the packaging strap of the roll of the pultruded plate product 3 is cut one by one with scissors, and the packaging strap and roll protective pad are removed. A wallpaper knife is used to lift the release fabric 31 on both sides of the end of the pultruded plate product 3, the release fabric 31 is torn in the unwinding direction for a specified length, and the end of the plate material after tearing the release fabric is fixed to the traction roller of the unwinding machine, and the release fabric 31 on both sides of the plate material is wound onto the winding rollers of the winding machine on both sides of the plate material, and the release fabric 31 is wound at least one turn on the winding roller while ensuring that the release fabric 31 remains taut.

Optionally, the initial unwinding speed of the unwinding machine is 0.5m/s, and its maximum unwinding speed during subsequent operations is ≤1m/s. The fixation stability of the roll of the pultruded plate product 3 is checked. After the end of the release fabric 31 is fixed and the end of the pultruded plate product 3 is in the middle of the traction roller, the unwinding machine starts to unwind. When one roll of pultruded material is processed, the release fabric 31 wound on the winding machine is taken out, the dust and debris on the winding roller and the pultruded plate product 3 are cleaned, and the end-fixing operation of the release fabric 31 is continued.

In another example, the release fabric 31 at the bottom of the pultruded plate product 3 corresponding to the first standardized pultruded plate layer and the release fabric 31 at the top of the pultruded plate product 3 corresponding to the last pultruded plate layer can be retained periodically based on the molding timing.

In another example, the step of trimming and tensioning a plurality of first pultruded plates along the length direction of the first pultruded plates may include the following steps.
(1) based on the input plate length setting parameters, the line speed measuring instrument of the unwinding machine traction unit automatically measures the length of the first pultruded plate being unwound and feeds back signals based on the predetermined length requirements. After receiving the predetermined length signal, the plate cutting device starts the cutting saw head to trim the first pultruded plate. To ensure the continuous operation of the production line, in addition to moving laterally in a direction perpendicular to the length direction of the first pultruded plate, the cutting saw head also moves in the longitudinal direction of the first pultruded plate, and the longitudinal movement speed is consistent with the unwinding speed to ensure that the cutting end face of the first pultruded plate is flat.
(2) A chamfering grinder is used to chamfer and grind the end of the first pultruded plate from the blade tip towards the blade root. After the first pultruded plate completes the chamfering and grinding, it is conveyed through the plate cleaning unit to remove all the dust generated in the previous grinding operation. The first pultruded plate is then flattened and tensioned to form the second pultruded plate.

In some embodiments, the standardized pultruded plate layers can be spliced after multi-layer stacking, allowing them to be full-width or composed of multiple widths spliced in the width direction. When producing the standardized pultruded plate layers, a plurality of second pultruded plates can be spliced or trimmed along the width direction of the second pultruded plate based on the actual dimension requirements.

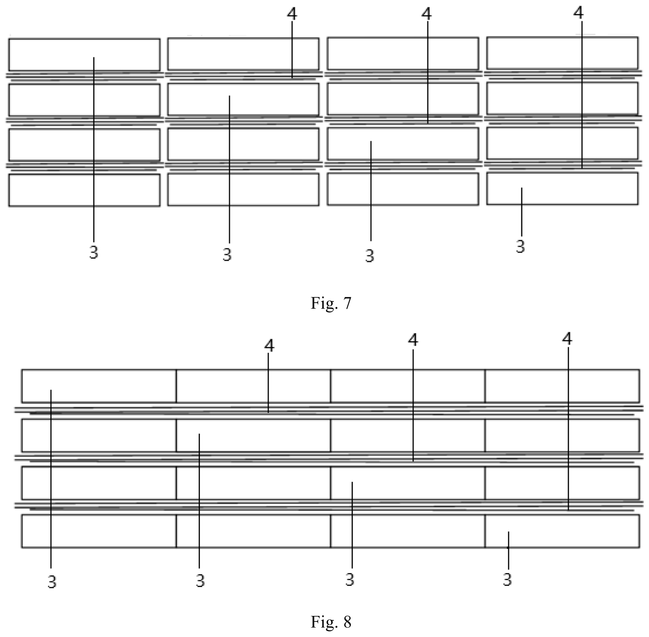

In an example, as shown in Fig. 7, the standardized pultruded plate layers in the main beam intermediate body are spliced in the width direction. The interlayer bonding layer 4 is sandwiched between adjacent standardized pultruded plate layers. The interlayer bonding layer 4 is provided corresponding to the standardized pultruded plate layers and is spliced from a plurality of individuals in the width direction.

In another example, as shown in Fig. 8, the standardized pultruded plate layers in the main beam intermediate body are full-width in the width direction, with the interlayer bonding layer 4, which corresponds to these layers, sandwiched between adjacent layers and also full-width in the width direction.

In an example, with references to Figs. 7 and 8, the interlayer bonding layer 4 consists of a gas-permeable felt, a fiber fabric layer, and prepreg. The prepreg is located at the bottom, with the gas-permeable felt sandwiched between the fiber fabric layer and the prepreg. Additionally, the prepreg can be a carbon fiber prepreg, and the step of laying this interlayer bonding layer 4 may include the following steps.
(1) The carbon fiber prepreg stored in the cold storage is transferred to the warming room for preheating and thawing, and the start and end dates of preheating are recorded. The thawing conditions are generally as follows: place it at 25°C for 24 hours. If the temperature is low, use a heat blower, an air conditioner, or other heating device to heat the environment to control the surface temperature of the carbon fiber prepreg around 25°C. During the preheating and thawing process of the carbon fiber prepreg, workers need to regularly measure the temperature around the carbon fiber prepreg. If the temperature exceeds the allowed range, the outlet temperature of the heating device needs to be adjusted.
(2) After the carbon fiber prepreg is thawed, the protective film of the carbon fiber prepreg is removed. The fabric fixing bracket is removed from the fabric laying vehicle, the fabric fixing bracket is inserted from one side of the carbon fiber prepreg, then the lifting hook passes through the fabric fixing bracket, and the crane is used to lift the carbon fiber prepreg and transfer it to the string position for installing and fixing the carbon fiber prepreg on the bracket of the fabric laying vehicle. Then, the pre-adjusted tension is set. It can be understood that, due to the large dimension of large wind turbine blades, a fabric laying vehicle can be used to lay the interlayer bonding layer 4. Optionally, the pre-adjusted tension is 260N.
(3) The carbon fiber prepreg passes through the upper part of the drive shaft and out from the lower part, and the fiber fabric layer is pulled out from the root of the wind turbine blade (when workers pull the fiber fabric layer, they should hold the middle position and not directly grab both sides to prevent the fiber fabric layer from unraveling.) After aligning the end point of the fiber fabric layer with the corresponding mark on the mold, it is placed down and the fiber fabric layer is pressed with both hands. A layer of a paper tape is attached to the upper and lower sides of the end of the gas-permeable felt that has been prepared in advance. One operator is assigned to each side of the gas-permeable felt to hold the paper tape and gently pull it out until the carbon fiber prepreg is aligned. After adjusting the sides to extend 20mm beyond the carbon fiber prepreg, the gas-permeable felt is attached to the carbon fiber prepreg and they are pulled out together, then the next step of the layup operation is carried out. The paper tape used to fix the gas-permeable felt is cut even along with part of the gas-permeable felt. After aligning the end point of the fiber fabric layer with the corresponding mark on the mold, it is placed down and the fabric layer is pressed with both hands.
(4) The cart moves towards the blade tip at an appropriate speed. The speed of the cart must not be too fast, and it should basically not stop during the movement to prevent the roller from pressing out string-like wrinkles in the fiber fabric layer. Operators on both sides of the mold smooth and compact the fiber fabric layer from the blade root to the blade tip. The distance between the cart and the person smoothing the fiber fabric layer must not exceed 2m. A tape measure is used to straighten and align the position lines on both sides of the mold. A line is drawn along the edge of the tape measure on the film of the fiber fabric layer, an aluminum tool is placed along a direction perpendicular to the mold axis under the fabric layer, and then the fiber fabric layer is placed down. The middle seam of the fiber fabric layer is aligned with the drawn mark, and the fiber fabric layer is cut along the middle seam with a wallpaper knife.

The above steps illustrate a method for laying the interlayer bonding layer 4 between the pultruded plates of a wind turbine blade.

In some embodiments, along the width direction of the main beam intermediate body, both sides of the interlayer bonding layer 4 and the standardized pultruded plate layers have adhesive gaps θ, which satisfies a relationship: 1mm≤θ≤5mm.

In an embodiment of the present application, the prepreg in the interlayer bonding layer 4 has been impregnated with a certain amount of resin, so its width can be a certain dimension narrower than the width of the standardized pultruded plate layers (generally 3mm). In this way, it can be ensured that after the prepreg is heated and solidified, the resin can flow to the edge of the standardized pultruded plate layers and achieve full filling.

In some embodiments, the present application provides a method for setting an absorbent layer on the surface of the main beam intermediate body and curing the main beam intermediate body to form the main beam, as shown in Fig. 3. The method may include the following steps.

S310: sequentially covering the whole surface of the second mold with an isolation film 5 and a first absorbent felt 6, the second mold being used for curing the main beam intermediate body.

In an embodiment of the present application, before laying the isolation film 5, the surface of the second mold is cleaned of all dust, glue residue, and other pollutants. Then, the isolation film 5 is laid, and a layer of first absorbent felt 6 is covered on the whole top of the isolation film 5. Based on this, the laying of the isolation film 5 protects the surface of the second mold, and the first absorbent felt 6 can absorb the resin overflowing from the bottom of the main beam intermediate body to a certain extent.

S320: transferring the main beam intermediate body into the interior of the second mold.

In an embodiment of the present application, the laying of the standardized pultruded plate layers and the interlayer bonding layer 4 is repeatedly cycled until the laying is completed. After all the standardized pultruded plate layers and the interlayer bonding layer 4 are laid, the generated main beam intermediate body can be bundled and fixed with a specified specification of fiber mesh tape. Then, the fixed main beam intermediate body is transferred into the interior of the second mold. Based on this, the main beam intermediate body can be further cured and formed in the predetermined second mold.

S330: covering the whole surface of the main beam intermediate body with a second absorbent felt 7 covering the vacuum port of the second mold.

In an embodiment of the present application, the second absorbent felt 7 covers the entire main beam intermediate body. When the length of the second absorbent felt 7 is insufficient, it can be spliced. A 10cm wide absorbent felt is used to wrap the spiral tube and placed on top of the laid absorbent felt, with the whole assembly positioned above the vacuum port. Based on this, due to the provision of the second absorbent felt 7, the vacuum port of the second mold can absorb excess resin, thereby ensuring that the internal channel of the vacuum port is not invaded by resin.

S340: laying the vacuum tape along the edge of the second mold and performing vacuum and pressure holding treatments on the second mold.

In an embodiment of the present application, two vacuum tapes are laid along the edge of the second mold, with the vacuum tapes laid outside the vacuum suction port. After the vacuum tape outside the vacuum suction port is peeled off, the vacuum pump is turned on to evacuate. When the value displayed by the vacuum pump no longer changes within 5 minutes, the pressure holding begins. Based on this, by evacuating and holding pressure inside the second mold, the necessary external conditions are provided for the curing and forming of the main beam intermediate body.

S350: After the second mold passes the pressure holding test, performing heating and heat preservation treatments on the second mold to form the main beam.

In an embodiment of the present application, after the second mold passes the pressure holding test, the second mold is heated. The mold heater can be set based on the required heating temperature. When the surface temperature of the second mold is below 100°C, an insulating cotton is placed on the surface of the second mold. When the surface temperature of the second mold is above 110°C, the insulating cotton is removed. Workers take temperature measurements and record them at specified intervals. Based on this, by heating, the thermoplastic resin in the main beam intermediate body is melted, and the fibers are fully impregnated under pressure.

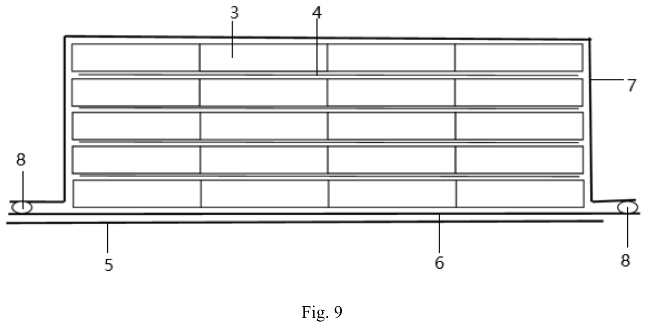

In an example, as shown in Fig. 9, a curing layout diagram of a main beam intermediate body is shown. The pultruded plate product 3 and the interlayer bonding layer 4 of the main beam intermediate body are provided to full width in the width direction. The outer side of the main beam intermediate body is provided with a first absorbent felt 6 and a second absorbent felt 7. The lower side of the first absorbent felt 6 is provided with an isolation film 5. Two sets of gas exhaust spiral tubes 8, which are symmetrically arranged, are provided between the first absorbent felt 6 and the second absorbent felt 7. When evacuating the second mold, the gas exhaust spiral tubes 8 can be used as vacuum channels.

It can be understood that due to the fact that both sides of the interlayer bonding layer 4 and the standardized pultruded plate layers have adhesive gaps θ, when the main beam intermediate body is heated, pressed, and cured, the molten thermoplastic resin, when secondarily impregnating the fibers in the interlayer bonding layer 4, can fill the cavity corresponding to the adhesive gaps θ to accommodate any excess material. Additionally, by providing the first absorbent felt 6 and the second absorbent felt 7, when there is still residual molten thermoplastic resin after the resin impregnates the main beam intermediate body, the residual part can also be absorbed by the first absorbent felt 6 and the second absorbent felt 7. Thus, no residual adhesive remains during the curing process of the main beam intermediate body. After the product is demolded, there is no need to separately grind the edges of the excess resin and the substandard bonding surface.

In some embodiments, the present application provides a wind turbine blade main beam, which is manufactured using the aforementioned method for forming the main beam.

In the manufacturing of the wind turbine blade main beam in the present application, the interlayer bonding layer 4 can be impregnated with thermoplastic resin for the first time and store the solidified thermoplastic resin. During the curing process of the main beam intermediate body, the thermoplastic resin melts and secondarily impregnates the fibers in the interlayer bonding layer 4. The impregnation quality of the thermoplastic resin between the fibers can be fully guaranteed. There is no need for additional separate resin infusion operations, which can fully ensure the quality of the wind turbine blade main beam forming.

It should be clear that the present application is not limited to the specific configurations and processes described and shown in the drawings above. For the sake of brevity, detailed descriptions of known methods are omitted here. In the above embodiments, several specific steps are described and shown as examples. However, the method process of the present application is not limited to the specific steps described and shown. Those skilled in the art can make various changes, modifications, and additions after understanding the gist of the present application, or change the order between steps.

It should also be noted that the exemplary embodiments mentioned in the present application describe some methods or systems based on a series of steps or devices. However, the present application is not limited to the above order of steps, that is to say, the steps can be executed in the order mentioned in the embodiments, or they can be different from the order in the embodiments, or several steps can be executed simultaneously.

The above is only the specific implementation manner of the present application, and those skilled in the art can clearly understand that, for the convenience and simplicity of description, the specific working processes of the above-described systems, modules, and units can refer to the corresponding processes in the foregoing method embodiments, and will not be repeated here. It should be understood that the scope of protection of the present application is not limited to this. Any equivalent modifications or substitutions that can be easily conceived by those skilled in the art within the technical scope disclosed by the present application should be covered within the protection scope of the present application.

## Claims

1. A method for forming a thermoplastic composite main beam, comprising:
forming a pultruded plate product with a surface covered by a release fabric using thermoplastic resin material;
stacking the pultruded plate product and an interlayer bonding layer with an adhesive property in a predetermined manner to form a main beam intermediate body; and
providing an absorbent layer on a surface of the main beam intermediate body and curing the main beam intermediate body to form a main beam.

2. The method for forming a thermoplastic composite main beam according to claim 1, wherein the pultruded plate product is an initial pultruded plate with a conventional structure; or
the pultruded plate product is a special-shaped pultruded plate with a special structure, and the step of forming a pultruded plate product with the surface covered by the release fabric using thermoplastic resin material comprises:
forming the initial pultruded plate with the surface covered by the release fabric using the thermoplastic resin material; and
melting and modifying the initial pultruded plate to form the pultruded plate product.

3. The method for forming a thermoplastic composite main beam according to claim 2, wherein the step of forming the initial pultruded plate with the surface covered by the release fabric using the thermoplastic resin material comprises:
passing a fiber strand through an impregnation tank containing the thermoplastic resin material using a traction device to form an impregnation fiber;
guiding and curing the impregnation fiber to produce a pultruded plate intermediate body; and
wrapping the pultruded plate intermediate body with the release fabric and cutting the pultruded plate intermediate body to form a plurality of initial pultruded plates with a predetermined dimension.

4. The method for forming a thermoplastic composite main beam according to claim 3, wherein before the step of guiding and curing the impregnation fiber to produce a pultruded plate intermediate body, the method further comprises:
passing the impregnation fiber through a predetermined gap of a positioning roller group to ensure that the thermoplastic resin material in a unit dimension of the impregnation fiber is within a predetermined range.

5. The method for forming a thermoplastic composite main beam according to claim 2, wherein the initial pultruded plate comprises a deformable part, and the step of melting and modifying the initial pultruded plate to form the pultruded plate product comprises:
transferring the initial pultruded plate to an interior of a first mold, which is configured for melting and modifying the initial pultruded plate and comprises a modification part corresponding to the deformable part;
heating the interior of the first mold to soften the initial pultruded plate by heat; and
applying pressure to the first mold to compress the deformable part by the modification part to form the pultruded plate product.

6. The method for forming a thermoplastic composite main beam according to claim 1, wherein the step of stacking the pultruded plate product and the interlayer bonding layer with an adhesive property in a predetermined manner to form a main beam intermediate body comprises:
processing a plurality of pultruded plate products based on a predetermined dimension of the main beam to obtain a standardized pultruded plate layer; and
alternately and intermittently laying the standardized pultruded plate layer and the interlayer bonding layer to form the main beam intermediate body, a bottom layer and a top layer of the main beam intermediate body each being the standardized pultruded plate layer.

7. The method for forming a thermoplastic composite main beam according to claim 6, wherein the predetermined dimension of the main beam comprises a predetermined length and a predetermined width, and the step of processing the plurality of pultruded plate products based on the predetermined dimension of the main beam to obtain the standardized pultruded plate layer comprises:
removing the release fabric from the surface of the pultruded plate product to obtain first pultruded plates;
based on the predetermined length, trimming and tensioning a plurality of first pultruded plates along a length direction of the first pultruded plates to obtain second pultruded plates; and
based on the predetermined width, splicing or trimming a plurality of second pultruded plates along a width direction of the second pultruded plates to obtain the standardized pultruded plate layer consistent with the predetermined dimensions of the main beam.

8. The method for forming a thermoplastic composite main beam according to claim 6, wherein along a width direction of the main beam intermediate body, both sides of the interlayer bonding layer and both sides of the standardized pultruded board layer have adhesive gaps θ, which satisfy a relationship: 1mm ≤ θ ≤ 5mm; and
the interlayer bonding layer comprises at least one of a film adhesive, prepreg, and semi-prepreg, as well as a gas-permeable felt and a fiber component.

9. The method for forming a thermoplastic composite main beam according to claim 1, wherein the step of providing the absorbent layer on the surface of the main beam intermediate body and curing the main beam intermediate body to form the main beam comprises:
laying an isolation film and a first absorbent felt sequentially on a whole surface of a second mold configured for curing the main beam intermediate body;
transferring the main beam intermediate body into an interior of the second mold;
laying a second absorbent felt on a whole surface of the main beam intermediate body, and the second absorbent felt fully covering a vacuum port of the second mold;
laying a vacuum tape along an edge of the second mold and performing vacuum treatment and pressure holding treatment on the second mold; and
after the second mold passes a pressure holding test, heating the second mold and preserving heat in the second mold to form the main beam.

10. A wind turbine blade main beam, manufactured by using the method for forming a thermoplastic composite main beam as claimed in any one of claims 1 to 9.
